# EUROPÄISCHE PATENTSCHRIFT

(11) **EP 0 907 538 B1**
(45) Veröffentlichungstag und Bekanntmachung des Hinweises auf die Patenterteilung: **03.04.2002**
(21) Anmeldenummer: 97927146.7
(22) Anmeldetag: 06.06.1997
(51) Int. Cl.: B60T 17/22, B60T 8/36, F16K 31/06

(54) **SITZVENTIL FÜR HYDRAULISCHE KRAFTFAHRZEUG-BREMSANLAGEN**
SEAT VALVE FOR HYDRAULIC BRAKING SYSTEMS OF MOTOR VEHICLES
SOUPAPE A SIEGE POUR SYSTEME DE FREINAGE HYDRAULIQUE DE VEHICULE A MOTEUR

(30) Priorität: 28.06.1996 DE 19625965
(43) Veröffentlichungstag der Anmeldung: 14.04.1999
(73) Patentinhaber: Continental Teves AG & Co. oHG, 60488 Frankfurt (DE)
(72) Erfinder: VOLZ, Peter, D-64291 Darmstadt (DE); KRIEG, Bernd, D-63633 Birstein (DE)
(74) Vertreter: Blum, Klaus-Dieter
(86) Internationale Anmeldenummer: EP9702937
(87) Internationale Veröffentlichungsnummer: WO9800325

(56) Entgegenhaltungen:
- EP-A- 0 256 272
- EP-A- 0 323 889
- DE-A- 3 312 054
- DE-A- 4 337 133
- DE-A- 4 408 166
- US-A- 4 056 255

## Beschreibung

Die Erfindung betrifft ein Sitzventil für hydraulische Kraftfahrzeug-Bremsanlagen mit Radschlupfregelung nach dem Oberbegriff des Patentanspruchs 1.

Die bisher für hydraulische Kraftfahrzeugbremsanlagen mit Radschlupfregelung verwendeten, in ihrer Grundstellung normalerweise geschlossenen Sitzventile haben den Nachteil, daß zum Zwecke der Evakuierung und Befüllung der Bremsanlage jeweils zeit- und kostenaufwendige Maßnahmen getroffen werden müssen, die dafür sorgen, daß das Sitzventil solange geöffnet bleibt, bis der Evakuierungs- und Befüllprozeß für die hydraulische Bremsanlage abgeschlossen ist. Ein Sitzventil der beschriebenen Art geht beispielhaft aus der DE 44 08 166 A1 hervor.

Als Abhilfemaßnahme für vorgenanntes Problem ist bereits aus der DE 43 37 133 A1 bekannt, zum Evakuieren und Befüllen der Bremsanlage das in der Grundstellung geschlossene Sitzventil mittels eines in Richtung des Bremsdruckgebers öffnenden Rückschlagventil zu überbrücken. Dies hat jedoch den Nachteil, daß erhebliche konstruktive Veränderungen an der Bremsanlage erforderlich sind.

Ein Sitzventil der gattungsbildenden Art ist bereits aus der US-A-4,056,255 bekannt geworden. Das Sitzventil weist zur Arretierung des Ventilschließgliedes in seiner Offenstellung einen im Bereich des Magnetkerns angebrachten Permanentmagneten auf, dessen Magnetkreis abhängig vom Magnetkreis einer unterhalb des Permanentmagneten angebrachten Magnetspule die Schaltstellung des Sitzventil bestimmt.

Daher ist es die Aufgabe der Erfindung, ein Sitzventil für hydraulische Kraftfahrzeugbremsanlagen mit Radschlupfregelung der angegebenen Art dahingehend zu verbessern, daß mit geringen zeit- und kostenaufwendigen Maßnahmen sowie mit möglichst einfachen Mitteln ein Evakuieren und Befüllen der normalerweise vom Sitzventil getrennten Druckmittelkanäle gewährleistet ist.

Diese Aufgabe wird für ein Sitzventil der eingangs genannten Art mit den kennzeichnenden Merkmalen des Patentanspruchs 1 gelöst, ein entsprechen des Verfahren wird in Patentanspruch 7 offenbart.

Weitere Merkmale der Erfindung gehen im nachfolgenden anhand der Beschreibung mehrerer Ausführungsbeispiele hervor.

### Es zeigen:

- Fig. 1: ein mittels erfindungsgemäßem Halteteil in Offenstellung arretiertes Sitzventil,
- Fig. 2: den Erfindungsgegenstand nach Fig. 1 nach Evakuierung und Befüllung der am Sitzventil angeschlossenen Druckmittelkanäle,
- Fig. 3: eine Draufsicht auf eine Ausführungsform für das erfindungsgemäße Halteteil,
- Fig. 4: eine weitere Ausführungsform eines im Sitzventil integrierten Halteteils.

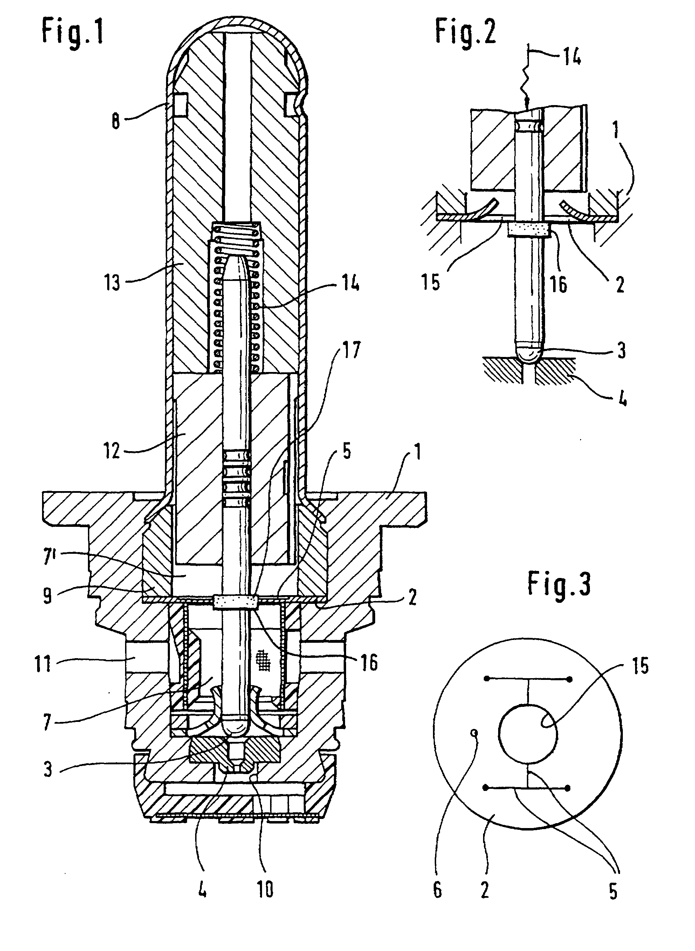

Die Fig. 1 zeigt in einer Schnittdarstellung ein Sitzventil in erheblich vergrößertem Maßstab, das in Patronenbauweise ein Ventilgehäuse 1 aufweist, in dessen unterem Ende ein Ventilsitzkörper 4 befestigt ist. Der vom Ventilsitzkörper 4 abgewandte Stirnflächenabschnitt des Ventilgehäuses 1 ist mittels einer domartigen Ventilhülse 8 verschlossen, die mit ihrem offenen Endabschnitt zwischen dem Ventilgehäuse 1 und einer in das Ventilgehäuse 1 eingesetzten Buchse verstemmt gehalten und gedichtet ist. Zwischen der Buchse 9 und einer Bohrungsstufe im Ventilgehäuse 1 befindet sich ein scheibenförmiges Halteteil 2 druckmitteldicht eingespannt, dessen Mittenöffnung 15 von einem stößelförmigen Ventilschließglied 3 durchdrungen ist. Das Ventilschließglied 3 ist mit seinem einen Ende in der abbildungsgemäßen Darstellung vom Ventilsitzkörper 4 beabstandet, womit eine Druckmittelverbindung zwischen dem unterhalb des Ventilsitzkörpers 4 gelegenen Druckmittelkanal 10 und dem oberhalb des Ventilsitzkörpers 4 in das Ventilgehäuse 1 radial einmündenden Druckmittelkanal 11 besteht. Die abgebildete Schaltstellung des Sitzventils nach Fig. 1 zeigt somit das Wesen der Erfindung, wonach im Ventilgehäuse 1 ein Halteteil 2 fixiert ist, das nach der Betätigung des Ventilschließgliedes 3 aus der geschlossenen Grundstellung heraus in die abbildungsgemäße Betriebsstellung, das Ventilschließglied 3 in der vom Ventilsitzkörper 4 abgehobenen Stellung arretiert. Die Arretierung des Halteteils 2 am stößelförmigen Abschnitt des Ventilschließgliedes 3 kann sowohl form- und/oder kraftschlüssig erfolgen. Im abgebildeten Ausführungsbeispiel wird hierzu vorgeschlagen, den sich in der Schließstellung des Sitzventils unterhalb des Halteteils 2 erstreckenden Stößelabschnitt mit einer Gummierung 17 zu versehen, wodurch beim Betätigen des Sitzventils in die abbildungsgemäße offene Betriebsstellung gute Haftbedingungen zwischen dem gummierten Abschnitt am Stößel und der Mittenöffnung 15 im Halteteil 2 gewährleistet sind, die für ein sicheres Verharren des Ventilschließgliedes 3 in der Offenstellung sorgen. Die Ansteuerung des Ventilschließgliedes 3 in seine Offenstellung geschieht durch elektromagnetische Erregung einer auf der Ventilhülse 8 angebrachten, in der Zeichnung nicht weiter dargestellten Ventilspule. Die elektrische Bestromung der Ventilspule sorgt zwangsläufig für das Anlegen des am Ventilschließglied 3 angebrachten Magnetankers 12 am Magnetkern 13, der sich innerhalb eines Teilbereichs der Ventilhülse 8 bis in den domförmigen Abschnitt erstreckt. Zwischen dem Magnetkern 13 und dem Magnetanker 12 befindet sich eine Feder 14, die nach bedarfsgerechtem Lösen des Ventilschließgliedes 3 vom Halteteil 2 für ein sicheres Verschließen des Ventilsitzkörpers 4 sorgt. Die Darstellung nach Fig. 1 zeigt somit das Sitzventil in einer die Druckmittelkanäle 10,11 hydraulisch verbindenden Stellung, die während der gesamten Zeitphase zur Evakuierung und Befüllung der Druckmittelkanäle 10,11 - ohne elektromagnetische Erregung des Sitzventils - beibehalten wird. Dies geschieht durch die Arretierungswirkung des Halteteils 2 am Ventiischließglied 3 solange, bis der auf die untere Stirnfläche des Halteteils 2 im Druckraum 7 anstehende Befülldruck den Berstdruck des Halteteils 2 erreicht hat.

Die Fig. 2 zeigt in Bezugnahme auf Fig. 1 die Verformung des Halteteils 2 unter Wirkung des Berstdrucks im Druckraum 7, der zu einem zungenartigen Auseinanderklaffen des Halteteils 2 im Bereich seiner Mittenöffnung 15 führt, womit sich das Ventilschließglied 3 vom Halteteil 2 lösen kann und unter Wirkung der Feder 14 in Richtung der Ventilschließstellung bewegt wird. Soweit bezüglich Fig. 2 nicht auf alle Einzelheiten eingegangen wird, entsprechen diese dennoch den in ihrem Wesen gezeigten Ausführungsformen für das Sitzventil nach Fig. 1.

Die Fig. 3 zeigt eine Draufsicht des aus Fig. 1 bekannten Halteteils 2. Außer der Scheibenkontur des Halteteils 2 lassen sich vorzugsweise beiderseits der Mittenöffnung 15 angebrachte Einkerbungen in der Oberfläche des Halteteils 2 erkennen, die bei entsprechender hydraulischer Druckbeaufschlagung die Sollbruchstellen 5 bilden. Damit erfolgt entsprechend der aus Fig. 2 bekannten Darstellung des Halteteils die gewünschte, zungenförmige Erweiterung des Halteteils 2 im Bereich der Mittenöffnung 15. Die Erweiterung der Mittenöffnung 15 kann nach Eintreten des Berstfalles sowohl durch entsprechende Formgebung der Sollbruchstellen 5 als auch durch entsprechende Wärmebehandlung, des vorzugsweise aus einem antimagnetischen Dünnblechteil bestehenden Halteteils 2 gezielt beeinflußt werden. Ferner weist das Halteteil 2 eine Blendenöffnung 6 auf, die dafür sorgt, daß während des Evakuiervorgangs innerhalb beider Druckmittelkanäle 10,11 nicht nur der den Druckmittelkanälen 10,11 zugewandte Druckraum 7, sondern auch der oberhalb des Halteteils 2 sich in die Ventilhülse 8 erstreckende Druckraum 7' evakuiert werden kann. Damit ist auch eine Evakuierung des relativ kleinen Druckraums 7' sichergestellt.

Zur Vorprüfung des Sitzventils nach seiner Herstellung auf Dichtigkeit befindet sich das Ventilschließglied 3 unter Wirkung der Feder 14 zunächst am Ventilsitzkörper 4. Soweit keine unzulässigen Leckverluste vom Druckmittelkanal 10 zum Druckmittelkanal 11 eintreten, wird durch elektromagnetische Erregung des Sitzventils das Ventilschließglied 3 vom Ventilsitzkörper 4 abgehoben und in der abbildungsgemäßen Darstellung nach Fig. 1 arretiert. In diesem Zustand verharrt es bis zur Evakuierung und Befüllung der Bremsanlage und Inbetriebnahme im Kraftfahrzeug. Wie bereits erwähnt, wird die Arretierung des Halteteils 2 am Ventilschließglied 3 beim Erreichen des Berstdrucks aufgehoben. Damit ist unter Verweis auf die Darstellung nach Fig. 2 dafür gesorgt, daß das Sitzventil für den Bremsenbetrieb funktionsbereit ist. Das Ventilschließglied 3 kann sodann im Rahmen einer Blokkierdruckregelung oder Antriebsschlupfregelung ausschließlich für die Zeitdauer eines auf den Magnetanker einwirkenden Stromimpuls geöffnet werden und nimmt nach Beendigung der elektromagnetischen Erregung ungehindert durch Wirkung der Feder 14 seine in der Grundstellung geschlossene Ventilposition ein.

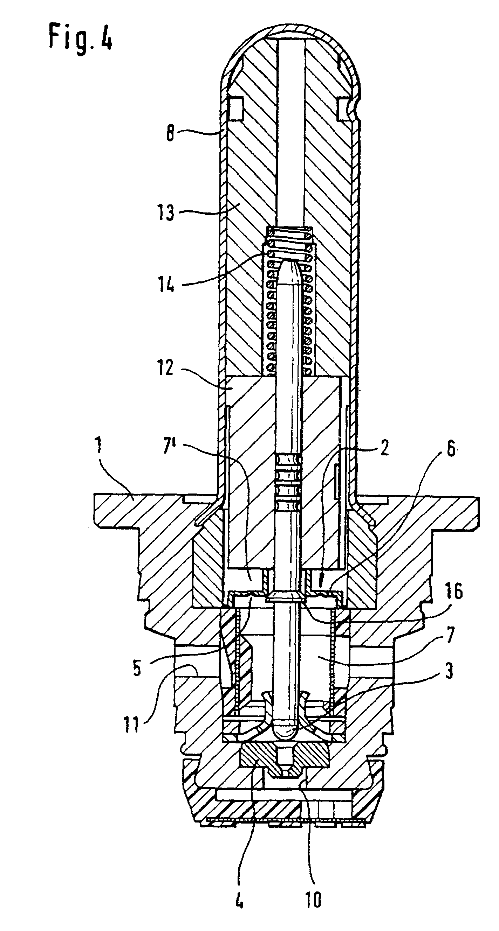

Eine alternative Ausführungsform des Sitzventils geht aus Fig. 4 hervor. Dieses unterscheidet sich von der Darstellung des Sitzventils nach Fig. 1 durch eine wesentlich vereinfachte Arretierung des Ventilschließgliedes 3 in Offenstellung mittels eines als Distanzscheibe ausgeführten, relativ einfach und damit billig herzustellenden Halteteils 2. Hierzu sieht die Erfindung vor, daß das im wesentlichen scheibenförmig gestaltete Halteteil 2 sowohl am Außenumfang als auch im Bereich der Mittenöffnung 15 einen Kragen bzw. Stege aufweist, die sich am Außenumfang des Halteteils 2 im Bereich des Ventilgehäuses 1 und im Bereich der Mittenöffnung 15 an der Stirnfläche des Magnetankers 12 abstützen. Je nach den Bauraumverhältnissen kann entweder auf den Steg bzw. Kragenbereich am Außenumfang oder am Innenumfang des Halteteils 2 verzichtet werden. Hierbei ist jedoch zu beachten, daß die Steg- bzw. Kragenhöhe zumindest dem erforderlichen Öffnungshub des Ventilschließgliedes 3 entspricht, um die gewünschte Evakuierung als auch Hochdruckbefüllung der Druckmittelkanäle 10,11 zu gewährleisten. Das Halteteil 2 weist ferner zumindest auf einer Stirnflächenseite eine ringförmige Querschnittsschwächung auf, die die Funktion einer Sollbruchstelle 5 übernimmt. Das Halteteil 2 ist vorzugsweise aus einem Kunststoff hergestellt, der nach Evakuierung der Kanäle und Hohlräume im Bereich des Sitzventils dem hydraulischen Befülldruck ausgesetzt wird und der sich bei Erreichen des Berstdruckes in zwei Hohlkörper zerlegt. Der innere, sich am Magnetanker 12 abstützende Hohlkörper wird mittels eines am Ventilschließglied 3 angebrachten Formteils 16 gesichert, während der äußere Hohlkörper abbildungsgemäß am Ringfilter und damit gleichfalls in der ursprünglichen Position im Ventilgehäuse 1 verharrt. Unter Wirkung der Feder 14 kann sodann das am Magnetanker 12 verharrende, innere Hohlteil gelöst vom äußeren Hohlteil in Richtung auf den Ventilsitzkörper 4 bewegt werden und seine die Druckmittelkanäle 10,11 trennende Grundstellung einnehmen. Eine erneute Freigabe des Ventilsitzkörpers 4 geschieht im nachfolgenden ausschließlich in Abhängigkeit einer elektromagnetischen Erregung des Magnetankers 12 sowohl zum Zwecke der Funktionsüberprüfung der Bremsanlage als auch im Falle einer Radschlupfregelung. Ergänzend wird darauf hingewiesen, daß analog zur Ausführungsform des Halteteils nach Fig. 1 bis 3 auch das nunmehr in Fig. 4 vorgestellte Halteteil 2 in der abbildungsgemäßen Darstellung von Fig. 4 an den Kontaktflächen zu den benachbarten Teilen druckmitteldicht anliegt oder mit diesen verbunden ist. Eine Evakuierung des sich in die Ventilhülse 8 erstreckenden Druckraums 7' kann sodann gleichfalls mittels einer Blendenöffnung 6 im Halteteil 2 als auch durch entsprechende Formgebung des elastischen Formteils 16 nach Art einer Rückschlagventilwirkung erfolgen. Soweit nicht auf alle Einzelheiten des in Fig. 4 dargestellten Sitzventils eingegangen wurde, entspricht dieses in seinem Wesen der zu Fig. 1 erläuterten Ausführungsform.

Die Erfindung führt somit zu dem Ergebnis, daß der Sekundärkreis, d.h. der Bremsleitungsabschnitt zwischen dem in Grundstellung geschlossenen Sitzventil und der nachgeschalteten Druckmitteleinrichtung einer nach dem Rückförderprinzip arbeitenden Bremsanlage verblüffend einfach evakuiert und befüllt werden kann, wenn das Sitzventil mittels eines als Berstscheibe wirksamen Halteteils für die Zeitphase der Evakuierung und Befüllung geöffnet bleibt. Das Halteteil bzw. der Fülldruck der Bremsanlage läßt sich so auslegen, daß nach dem Befüllen des Sekundärkreises das Halteteil an den Sollbruchstellen aufplatzt, wodurch der Ventilstößel mit dem Ventilschließglied vom Halteteil freigegeben wird und womit das Sitzventil schließt. Zur Sicherstellung der Berstund damit der Schließfunktion für das Sitzventil kann je nach Auslegung der Bremsanlage ggf. ein erhöhter hydraulischer Druckimpuls während der Befüllung für das Zerstören des Halteteils sorgen. Das Halteteil, insbesondere als Kunststoffteil ausgeführt, kann ohne erheblichen Aufwand in bestehende Sitzventile kostengünstig integriert werden.

### Bezugszeichenliste

- 1: Ventilgehäuse
- 2: Halteteil
- 3: Ventilschließglied
- 4: Ventilsitzkörper
- 5: Sollbruchstelle
- 6: Blendenöffnung
- 7,7': Druckraum
- 8: Ventilhülse
- 9: Buchse
- 10: Druckmittelkanal
- 11: Druckmittelkanal
- 12: Magnetanker
- 13: Magnetkern
- 14: Feder
- 15: Mittenöffnung
- 16: Formteil
- 17: Gummierung

## Patentansprüche

1. Sitzventil für hydraulische Kraftfahrzeugbremsanlagen mit Radschlupfregelung, mit einem Ventilgehäuse (1), das wenigstens einen Ventilsitzkörper (4) und ein Ventilschließglied (3) aufnimmt, wobei das Ventilschließglied (3) in der Grundstellung normalerweise am Ventilsitzkörper (4) anliegt, so daß eine Druckmittelverbindung zwischen einem ersten und wenigstens einem zweiten Druckmittelkanal (10, 11) getrennt ist, in der Betriebsstellung das Ventilschließglied (3) vom Ventilsitzkörper (4) abgehoben ist und die vorgenannte Druckmittelverbindung zwischen den Druckmittelkanälen (10, 11) herstellt, wobei im Ventilgehäuse (1) ein Halteteil (2) fixiert ist, das das Ventilschließglied (3) in der vom Ventilsitzkörper (4) abgehobenen Stellung arretiert, **dadurch gekennzeichnet, daß** das Halteteil (2) unter Wirkung eines definierten hydraulischen Drucks im Ventilgehäuse (1) eine Gestaltsanderung aufweist, in der das Ventilschließglied (3) vom Halteteil (2) freigegeben ist.

2. Sitzventil nach Anspruch 1, **dadurch gekennzeichnet, daß** das Halteteil (2) nach Betätigung des Ventilschließglieds (3) in die Offenstellung form- und/oder kraftschlüssig mit einem Stößelabschnitt des Ventilschließgliedes (3) in Eingriff steht.

3. Sitzventil nach Anspruch 1 oder 2, **dadurch gekennzeichnet, daß** das Halteteil (2) wenigstens eine örtliche Querschnittsschwächung, vorzugsweise Sollbruchstelle (5) aufweist, durch die unter Einwirkung eines definierten hydraulischen Drucks im Ventilgehäuse (1) das Ventilschließglied (3) vom Halteteil (2) freigegeben ist.

4. Sitzventil nach Anspruch 1, **dadurch gekennzeichnet, daß** eine in Richtung auf den Ventilsitzkörper (4) wirksame Feder (14) am Ventilschließglied (3) angeordnet ist.

5. Sitzventil nach einem der vorhergehenden Ansprtche 1 bis 3, **dadurch gekennzeichnet, daß** im Halteteil (2) und/oder zwischen dem Halteteil (2) und dem Ventilschließglied (3) wenigstens eine Blendenöffnung (6) vorgesehen ist, die einen zeitlich verzögerten Druckausgleich zwischen den Druckräumen (7,7') beiderseits des Halteteils (2) herstellt.

6. Sitzventil nach einem der vorhergehenden Ansprüche 1 bis 3, **dadurch gekennzeichnet, daß** das Halteteil (2) als Berstscheibe ausgebildet ist, die druckmitteldicht zu ihrer Befestigungsstelle im Ventilgehäuse (1) gehalten ist.

7. Verfahren zum Betrieb einer zur Radschlupfregelung nach dem Rückförderprinzip wirkenden hydraulischen Bremsanlage, mit einem Sitzventil, das in seiner Grundstellung normalerweise einen von einer Radbremse zu einer Rückförderpumpe führenden Druckmittelkanal getrennt hält, **dadurch gekennzeichnet, daß** während der Evakuierung der Bremsanlage das Sitzventil mittels eines Halteteils (2) in eine die Druckmittelverbindung zwischen Radbremse und Rückförderpumpe öffnenden Betriebsstellung arretiert wird, und daß die Arretierung zwischen dem Sitzventil und dem Halteteil (2)nach Befüllung des Druckmittelkanals (10,11) mit Bremsflüssigkeit und Erreichen eines definierten hydraulischen Drucks getrennt wird.

## Claims

1. Seat valve for automotive vehicle hydraulic brake systems with wheel slip control, including a valve housing (1) accommodating at least one valve seat member (4) and a valve closure member (3), the said valve closure member (3) in its basic position normally bearing against the valve seat member (4) so that a pressure fluid connection between a first and at least one second pressure fluid channel (10, 11) is separated, the valve closure member (3) has lifted from the valve seat member (4) in the operating position and establishes the above-mentioned pressure fluid connection between the pressure fluid channels (10, 11), wherein a retaining member (2) is fixed in the valve housing (1) and locks the valve closure member (3) in the position lifted from the valve seat member (4),
**characterized in that** the retaining member (2), under the effect of a defined hydraulic pressure in the valve housing (1), exhibits a change in shape in which the valve closure member (3) is released by the retaining member (2).

2. Seat valve as claimed in claim 1,
**characterized in that** the retaining member (2), after activation of the valve closure member (3) into the open position, is in positive and/or operative engagement with a tappet portion of the valve closure member (3).

3. Seat valve as claimed in claim 1 or claim 2,
**characterized in that** the retaining member (2) includes at least one local cross-sectional weakening, preferably preset breaking point (5), by which the valve closure member (3) is released from the retaining member (2) under the action of a defined hydraulic pressure in the valve housing (1).

4. Seat valve as claimed in claim 1,
**characterized in that** a spring (14) which acts in the direction of the valve seat member (4) is mounted on the valve closure member (3).

5. Seat valve as claimed in anyone of the preceding claims 1 to 3,
**characterized in that** in the retaining member (2) and/or between the retaining member (2) and the valve closure member (3), there is provision of at least one orifice (6) which provides a pressure balance between the pressure chambers (7, 7') on either side of the retaining member (2) with a time delay.

6. Seat valve as claimed in anyone of the preceding claims 1 to 3,
**characterized in that** the retaining member (2) is designed as a rupture disc which is retained in the valve housing (1) in a pressure-tight relationship to its point of attachment.

7. Method of operating a hydraulic brake system that acts according to the recirculating principle for wheel slip control, including a seat valve which, in its basic position, normally keeps a pressure fluid channel separated that leads from a wheel brake to a recirculating pump,
**characterized in that** during evacuation of the brake system, the seat valve is locked by means of a retaining member (2) in an operating position opening the pressure fluid connection between the wheel brake and the recirculating pump, and **in that** locking between the seat valve and the retaining member (2) is separated after the pressure fluid channel (10, 11) is filled with brake fluid and a defined hydraulic pressure is reached.

## Revendications

1. Valve à levée pour dispositifs de freinage de véhicule automobile à régulation du glissement de roue, comprenant un boîtier de valve (1) qui sert à loger au moins un corps de siège de valve (4) et un obturateur de valve (3), l'obturateur de valve (3) étant normalement, dans la position de base, appliqué en appui sur le corps de siège de valve (4), de sorte qu'une liaison d'agent de pression entre un premier et au moins un second conduits d'agent de pression (10, 11) est interrompue, l'obturateur de valve (3) étant, dans la position de fonctionnement, soulevé vis-à-vis du corps de siège de valve (4) et produisant la liaison d'agent de pression précitée entre les conduits d'agent de pression (10, 11), tandis qu'une pièce de maintien (2), qui immobilise l'obturateur de valve (3) dans la position soulevée vis-à-vis du corps de siège de valve (4), est fixée dans le boîtier de valve (1), **caractérisée en ce que** la pièce de maintien (2) présente, sous l'action d'une pression hydraulique définie dans le boîtier de valve (1), un changement de configuration dans lequel l'obturateur de valve (3) est libéré de la pièce de maintien (2).

2. Valve à levée suivant la revendication 1, **caractérisée en ce qu'**après un actionnement de l'obturateur de valve (3) dans la position ouverte, la pièce de maintien (2) est en prise par complémentarité de formes et/ou application de force avec une section de poussoir de l'obturateur de valve (3).

3. Valve à levée suivant la revendication 1 ou 2, **caractérisée en ce que** la pièce de maintien (2) comporte au moins un affaiblissement de section transversale localisé, de préférence un emplacement de rupture imposé (5), au moyen duquel, sous l'action d'une pression hydraulique définie dans le boîtier de valve (1), l'obturateur de valve (3) et libéré de la pièce de maintien (2).

4. Valve à levée suivant la revendication 1, **caractérisée en ce qu'**un ressort (14) exerçant son action en direction du corps de siège de valve (4) est disposé sur l'obturateur de valve (3).

5. Valve à levée suivant l'une des revendications précédentes 1 à 3, **caractérisée en ce que**, dans la pièce de maintien (2) et/ou entre la pièce de maintien (2) et l'obturateur de valve (3), il est prévu au moins un orifice d'étranglement (6) qui produit une compensation de pression retardée dans le temps entre les chambres de pression (7, 7') situées de part et d'autre de la pièce de maintien (2).

6. Valve à levée suivant l'une des revendications précédentes 1 à 3, **caractérisée en ce que** la pièce de maintien (2) est réalisée sous forme d'une plaquette claquante maintenue d'une manière étanche à l'agent de pression vis-à-vis de son emplacement de fixation dans le boîtier de valve (1).

7. Procédé de mise en oeuvre d'un dispositif de freinage hydraulique à régulation du glissement de roue travaillant suivant le principe de retour, comprenant une valve à levée qui, dans sa position de base, maintient normalement obturé un conduit d'agent de pression menant d'un frein de roue à une pompe de retour, **caractérisé en ce que**, pendant la mise sous vide du dispositif de freinage, la valve à levée est immobilisée au moyen d'une pièce de maintien (2) dans une position de fonctionnement ouvrant la liaison d'agent de pression entre frein de roue et la pompe de retour, et **en ce que** l'immobilisation entre la valve à levée et la pièce de maintien (2) est interrompue après remplissage du conduit d'agent de pression (10, 11) en liquide de frein et obtention d'une pression hydraulique définie.
